# EUROPÄISCHE PATENTSCHRIFT

(11) **EP 3 944 565 B1**
(45) Veröffentlichungstag und Bekanntmachung des Hinweises auf die Patenterteilung: **27.03.2024**
(21) Anmeldenummer: 21178689.2
(22) Anmeldetag: 10.06.2021
(51) Int. Cl.: G05B 19/042, H04L 12/10, H04L 12/40, G06F 13/20, G06F 13/42

(54) **SYSTEM UND VERFAHREN ZUM HERSTELLEN EINER IO-LINK DATENVERBINDUNG ZWISCHEN EINER MASTER-EINHEIT UND ZUMINDEST EINER DEVICE-EINHEIT**
SYSTEM AND METHOD FOR ESTABLISHING AN IO-LINK BETWEEN A MASTER UNIT AND AT LEAST ONE DEVICE UNIT
SYSTÈME ET PROCÉDÉ D'ÉTABLISSEMENT D'UNE CONNEXION DE DONNÉES SELON LA NORME IO-LINK ENTRE UNE UNITÉ MAÎTRISASSE ET AU MOINS UN APPAREIL DISPOSITIF

(30) Priorität: 21.07.2020 DE 102020119124
(43) Veröffentlichungstag der Anmeldung: 26.01.2022
(73) Patentinhaber: Turck Holding GmbH, 58553 Halver (DE)
(72) Erfinder: Köhler, Jens, 09117 Chemnitz (DE); Schubert, Rene, 09112 Chemnitz (DE)
(74) Vertreter: DTS Patent- und Rechtsanwälte Schnekenbühl und Partner mbB

(56) Entgegenhaltungen:
- CN-A- 110 266 569
- DE-A1-102016 223 024

## Beschreibung

Die Erfindung betrifft ein System und Verfahren zum Herstellen einer Datenverbindung zwischen einer Master-Einheit und zumindest einer Device-Einheit. Sie betrifft ferner ein Verfahren zum Herstellen einer Datenverbindung zwischen einer Master-Einheit und zumindest einer Device-Einheit.

In vielen Bereichen der Automatisierungstechnik sind Systeme erwünscht, die ein flexibles Koppeln und Entkoppeln von Geräten mit einer Steuereinheit erlauben. Zum Beispiel sollen Sensoren und Werkzeuge angesteuert werden, wobei jedoch beispielsweise der Verschleiß von einzelnen Komponenten oder ein Chargenwechsel es notwendig machen können, ein angeschlossenes Gerät zu wechseln. Ferner soll eine Steuerung flexibel in verschiedenen Kontexten einsetzbar sein.

In diesem Zusammenhang können bei bekannten Systemen verschiedene Probleme auftreten. Beispielsweise kann es vorkommen, dass Abstände mittels Leitungen überbrückt werden müssen, welche eine für verbreitete Kommunikationsprotokolle maximal zulässige Länge überschreiten. Ferner sind sogenannte Koppler bekannt, die beispielsweise zur Daten- und/oder Leistungsübertragung in einer Verbindung von Geräten eingesetzt werden. Dabei können gebräuchliche Koppler nicht so umfassend genutzt werden, wie dies wünschenswert ist, beispielsweise auch um fehlerhafte Kopplungsvorgänge zu unterbinden.

In der DE 10 2016 217 706 B4 wird ein Verfahren zur bidirektionalen Datenübertragung zwischen einem IO-Link Device und einem IO-Link Master über eine Zwischeneinheit beschrieben. Aus der DE 10 2016 223024 A1 ist ein Netzwerk der Automatisierungstechnik mit einer Steuereinheit, einer Mastereinheit und mehreren I/O-Einheiten bekannt. Aus der CN 110 266 569 A ist eine I O-LI N K-Anschl usserweiterungsvorrichtung bekannt.

Es ist die Aufgabe der Erfindung, ein System bereitzustellen, das eine flexible und an die Bedürfnisse des Anwendungskontextes anpassbare Verbindung zwischen verschiedenen Einheiten ermöglicht.

Diese Aufgabe wird durch ein System der eingangs genannten Art mit den Merkmalen des Anspruchs 1 gelöst. Vorteilhafte Ausgestaltungen und Weiterbildungen der Erfindung sind in den abhängigen Ansprüchen angegeben.

Bei dem System zum Herstellen einer Datenverbindung zwischen einer Master-Einheit und zumindest einer Device-Einheit sind die Master-Einheit mit einer Primär-Koppler-Einheit und die zumindest eine Device-Einheit mit einer Sekundär-Koppler-Einheit jeweils zur elektrischen Leistungsübertragung und zur Datenübertragung gekoppelt. Dabei sind die Primär-Koppler-Einheit und die Sekundär-Koppler-Einheit zur Datenübertragung koppelbar. Dabei ist ein Steuersignal empfangbar. Das System weist drei in Abhängigkeit von dem empfangenen Steuersignal aktivierbare Betriebszustände auf, wobei beim aktivierten ersten Betriebszustand eine dem IO-Link Standard gemäße datentechnische Verbindung zwischen der Master-Einheit und der Device-Einheit besteht. Beim aktivierten zweiten Betriebszustand sind der Primär-Koppler-Einheit Primär-Koppler-Identifikationsdaten zugeordnet, wobei eine dem IO-Link Standard gemäße datentechnische Verbindung zwischen der Master-Einheit und der Primär-Koppler-Einheit besteht. Beim aktivierten dritten Betriebszustand sind der Sekundär-Koppler-Einheit Sekundär-Koppler-Identifikationsdaten zugeordnet, wobei eine dem IO-Link Standard gemäße datentechnische Verbindung zwischen der Master-Einheit und der Sekundär-Koppler-Einheit besteht.

Dies erlaubt vorteilhafterweise eine direkte Kommunikation der Master-Einheit mit den verschiedenen Komponenten des Systems, etwa um Konfigurationen anzupassen oder um den Aufbau der Verbindung zu steuern.

Primär- und Sekundär-Koppler-Einheiten sind bei der Erfindung miteinander zur Datenübertragung koppelbar. Bei einer weiteren Ausbildung sind Primär- und Sekundär-Koppler-Einheiten des Systems ferner zur elektrischen Leistungsübertragung koppelbar. Die Koppelung der Primär- und Sekundär-Koppler-Einheiten zur Leistungs- und/oder Datenübertragung kann insbesondere drahtlos erfolgen.

Bei einer weiteren Ausbildung des Systems sind die Primär- und Sekundär-Koppler-Einheiten des Systems drahtlos zur elektrischen Leistungs- und zur Datenübertragung koppelbar.

Bei bekannten Systemen ist dagegen üblicherweise vorgesehen, dass zumindest eine dieser Funktionen durch eine leitungsbasierte Koppelung erreicht wird. Die drahtlose Koppelung kann auf verschiedene Weisen erfolgen. Eine Leistungsübertragung wird insbesondere mittels einer induktiven Koppelung erhalten. Eine datentechnische Verbindung kann beispielsweise über eine induktive Koppelung, Nahfeldkommunikation, Bluetooth oder WiFi hergestellt werden. Es können zum Beispiel verschiedene Varianten eines Verfahrens, beispielsweise Varianten des Bluetooth-Standards, verwendet werden, um die Leistungsaufnahme, Reichweite, Sicherheit und andere Eigenschaften der datentechnischen Verbindung anzupassen.

Durch die drahtlose Koppelung wird sowohl eine mechanische als auch eine galvanische Trennung zwischen Master- und Device-Einheit erreicht und die Verbindung der Master-Einheit zu der Device-Einheit oder zu verschiedenen Device-Einheiten kann besonders einfach, verschleißfrei und flexibel hergestellt werden.

Das System kann ferner, insbesondere wenn der erste Betriebszustand aktiviert ist, Probleme mit Latenzzeiten bei der Signalübertragung beheben, indem die Primär- und Sekundär-Koppler-Einheiten eine Datenkommunikation zwischen den jeweils angeschlossenen Geräten vermitteln. Indem Datenverbindungen sowohl zwischen der Master-Einheit und der Primär-Koppler-Einheit, als auch zwischen der Sekundär-Koppler-Einheit und der Device-Einheit bestehen, kann beispielsweise auch die Datenverbindung zwischen Master- und Device-Einheit hergestellt werden. Auf diese Weise kann beispielsweise eine IO-Link Verbindung hergestellt werden, die bei einer direkten Koppelung zwischen Master- und Device-Einheit wegen zu langer Latenzen und/oder Leitungswege nicht herstellbar oder instabil wäre.

Anders gesagt kann dabei eine Verbindung, insbesondere eine IO-Link Verbindung, zwischen Master-Einheit und Device-Einheit so hergestellt werden, dass sich die Kombination aus Primär- und Sekundär-Koppler-Einheit wie eine verlängerte Kabelleitung verhält. Da der IO-Link Standard nur ein Kabel als Verbindungsmedium vorsieht, kann das System somit die gewünschte Verbindung herstellen. Insbesondere sind die Koppler-Einheiten im ersten Betriebszustand selbst nicht "sichtbar" und werden weder von der Master-Einheit noch von der Device-Einheit als eigene Geräte angesprochen.

Bei der Datenverbindung werden die beteiligten Einheiten mittels jeweils zugeordneten Identifikationsdaten, etwa anhand eines Identifikationscodes, angesprochen. Beispielsweise sind bei dem System bei einer Datenverbindung, insbesondere mittels IO-Link, den beteiligten Einheiten eine *"Device-ID" bzw. "Master-ID"* und eine "*Vendor-ID*" zugeordnet. Insbesondere ist im ersten Betriebszustand die Primär-Koppler-Einheit mittels Identifikationsdaten ansprechbar, die den Identifikationsdaten der Device-Einheit entsprechen - diese Verbindung entspricht daher zumindest aus Sicht der Master-Einheit einer direkten Verbindung mit der Device-Einheit. Ferner identifiziert sich insbesondere im ersten Betriebszustand die Sekundär-Koppler-Einheit mittels Identifikationsdaten, die den Identifikationsdaten der Master-Einheit entsprechen gegenüber der angeschlossenen Device-Einheit - diese Verbindung entspricht daher zumindest aus Sicht der Device-Einheit einer direkten Verbindung mit der Master-Einheit. Dadurch sind die Primär- und Sekundär-Koppler-Einheiten insbesondere für die angeschlossenen Master- und Device-Einheiten praktisch "unsichtbar". Um nun tatsächlich eine IO-Link Verbindung zwischen der Master-Einheit und der Device-Einheit herstellen zu können, sind die Primär- und Sekundär-Koppler-Einheiten miteinander gekoppelt - insbesondere für eine drahtlose Daten- und Leistungsübertragung - und so eingerichtet, dass die von der jeweils angeschlossenen Einheit empfangenen Signale an die andere Koppler-Einheit weitergeleitet werden, von wo aus die Signale dann der weiteren Einheit zugeleitet werden, die an der anderen Koppler-Einheit angeschlossen ist.

Es kann eine Implementierung vorgesehen sein, bei der die IO-Link Verbindung zwischen Master- und Device-Einheit mittels zweier separater IO-Link Verbindungen hergestellt wird, nämlich einerseits zwischen Master-Einheit und Primär-Koppler-Einheit und andererseits zwischen Sekundär-Koppler-Einheit und Device-Einheit. Das System ist jedoch ausdrücklich nicht auf eine solche Implementierung beschränkt, sondern die Verbindung kann auch auf andere Weise hergestellt werden, insbesondere als eine durchgehende IO-Link Verbindung zwischen Master- und Device-Einheit. Die Verbindung kann dabei auch in anderer Weise als über IO-Link aufgebaut werden.

Wenn der zweite oder dritte Betriebszustand des Systems aktiviert ist, dann kann die Master-Einheit datentechnisch mit der Primär- beziehungsweise mit der Sekundär-Koppler-Einheit verbunden werden, nämlich über eine "*IO*-*Link"*-Verbindung. Insbesondere wird im dritten Betriebszustand die Verbindung der Master-Einheit mit der Sekundär-Koppler-Einheit über die Primär-Koppler-Einheit hergestellt.

Diese im zweiten und dritten Betriebszustand herstellbaren Verbindungen erweitern das System gegenüber der sonst vorgesehenen Verbindung zwischen Master- und Device-Einheit insofern, als nunmehr beispielsweise direkt auf die Koppler-Einheiten zugegriffen werden kann, etwa um an dieser Stelle Daten auszulesen, Einstellungen vorzunehmen oder eine Datenverbindung einer der Koppler-Einheiten zu weiteren Einheiten zu steuern.

Um die IO-Link Verbindungen herstellen zu können, werden den an der Verbindung beteiligten Einheiten insbesondere eigene Identifikationsdaten zugewiesen, anhand derer sie bei der Datenverbindung angesprochen werden beziehungsweise mittels derer sie sich anderen Einheiten gegenüber identifizieren. Insbesondere können die im zweiten Betriebszustand der Primär-Koppler-Einheit zugeordneten Primär-Koppler-Identifikationsdaten von den Device-Identifikationsdaten der Device-Einheit D verschieden sein. Dadurch wird sichergestellt, dass die Master-Einheit ihre Kommunikationsverbindung mit der Primär-Koppler-Einheit herstellt und nicht mit der Device-Einheit. Ferner können sich insbesondere im dritten Betriebszustand die der Sekundär-Koppler-Einheit zugeordneten Sekundär-Koppler-Identifikationsdaten von den Primär-Koppler-Identifikationsdaten und den Device-Identifikationsdaten der Device-Einheit unterscheiden.

Die Betriebszustände könnten auf verschiedene Weisen aktiviert werden, etwa automatisch ausgelöst durch bestimmte Bedingungen oder Ereignisse, etwa wenn Primär- und Sekundärkoppler getrennt werden, oder es könnten Schalter vorgesehen sein, die einen bestimmten der Zustände aktivieren.

Die Aktivierung der verschiedenen Betriebszustände erfolgt bei dem System anhand eines Steuersignals. Dieses Steuersignal wird insbesondere von der Master-Einheit empfangen, es kann aber alternativ oder zusätzlich von einer anderen Einheit des Systems empfangen werden. Das Steuersignal kann ferner von der Master-Einheit an die Primär- und/oder Sekundär-Koppler-Einheit gesendet und dort empfangen werden.

Das Steuersignal kann auf verschiedene Weisen erzeugt werden, etwa automatisch bei einem Trennvorgang, bei dem eine Verbindung zwischen zwei Einheiten des Systems unterbrochen wird, oder bei einem Verbindungsvorgang, bei dem eine Verbindung zwischen zwei Einheiten des Systems hergestellt wird. Das Steuersignal kann ferner in Abhängigkeit von einer Eingabe oder einer anderen Bedienhandlung eines Nutzers ausgelöst werden; dabei wird das Steuersignal insbesondere in Abhängigkeit von der Eingabe beziehungsweise von der Bedienhandlung gebildet, sodass ein Nutzer verschiedene Steuersignale auslösen kann. Eine Bedienhandlung kann etwa das Betätigen eines Schalters umfassen.

Bei einer Ausbildung des Systems sind die Primär-Koppler-Einheit und die Sekundär-Koppler-Einheit als baulich getrennte Einheiten ausgebildet. Insbesondere ist dabei vorgesehen, dass die beiden Koppler-Einheiten nicht von einer einzelnen Zwischeneinheit umfasst sind. Dadurch können die Systemkomponenten vorteilhafterweise besonderes einfach gewechselt werden und der Einsatzbereich des Systems wird vergrößert.

Bei einer weiteren Ausbildung können die Primär-Koppler-Einheit und die Sekundär-Koppler-Einheit des Systems in einer gemeinsamen baulichen Einheit ausgebildet sein.

Bei einer weiteren Ausbildung besteht die Koppelung der Master-Einheit mit der Primär-Koppler-Einheit und/oder die Koppelung der Device-Einheit mit der Sekundär-Koppler-Einheit über eine kabelgebundene Verbindung. Dadurch ist vorteilhafterweise eine besonders einfache und zuverlässige Verbindung zwischen der Master-Einheit und der Primär-Koppler-Einheit beziehungsweise zwischen der Sekundär-Koppler-Einheit und der Device-Einheit möglich.

Insbesondere wird hier von einer "Kupfer-basierten" Verbindung oder "Kupfer-Schnittstelle" gesprochen, während die drahtlose Koppelung über eine "Luft-Schnittstelle" erfolgt. Wie oben bereits für die drahtlose Verbindung erläutert, können auch für die kabelgebundene verschiedene Verfahren und Standards genutzt werden, je nach Anwendungsfall und Kontext.

Bei einer Weiterbildung ist das System dazu eingerichtet, einen Koppelungszustand zwischen der Primär-Koppler-Einheit und der Sekundär-Koppler-Einheit zu erfassen und in Abhängigkeit von dem erfassten Koppelungszustand den ersten, zweiten oder dritten Betriebszustand zu aktivieren. Dadurch kann der Betriebszustand vorteilhafterweise an die aktuelle Konfiguration des Systems angepasst werden.

Das Erfassen des Koppelungszustands kann auf verschiedene, an sich bekannte Weisen erfolgen. Beispielsweise kann ein geschlossener oder offener Zustand eines Schaltkreises erfasst werden. Ferner kann ein Anfragesignal gesendet und gegebenenfalls ein Antwortsignal empfangen werden.

Beispielsweise können ein verbundener und ein getrennter Koppelungszustand definiert sein. Insbesondere wird ein verbundener Koppelungszustand erfasst, wenn zwischen der Primär- und Sekundär-Koppler-Einheit eine Datenverbindung und/oder eine Verbindung zur Leistungsübertragung einzeln oder in Kombination besteht; umgekehrt kann dabei ein getrennter Koppelungszustand erfasst werden, wenn keine solche Verbindung oder nur eine der beiden Verbindungsarten besteht. Ein getrennter Koppelungszustand kann ferner erfasst werden, wenn eine der Koppler-Einheiten deaktiviert oder ausgeschaltet ist, wobei hierzu auch eine Deaktivierung eines bestimmten Moduls oder einer bestimmten Funktionalität der Koppler-Einheit ausreichen kann.

Die Erfassung des Koppelungszustands kann beispielsweise durch die Primär-Koppler-Einheit erfolgen und der erfasste Koppelungszustand kann an die Master-Einheit übertragen werden.

Beim Aktivieren eines neuen Betriebszustands kann insbesondere vorgesehen sein, dass die Primär-Koppler-Einheit einen Abbruch einer IO-Link Verbindung der Master-Einheit zu der Device-Einheit und/oder einen Abbruch einer Datenverbindung zu der Sekundär-Koppler-Einheit herbeiführt, um anschließend je nach dem neu aktivierten Betriebszustand eine neue IO-Link Verbindung der Master-Einheit zu einer anderen Einheit des Systems herzustellen.

Bei einer Ausbildung ist das System dazu eingerichtet, nachdem ein getrennter Koppelungszustand zwischen der Primär-Koppler-Einheit und der Sekundär-Koppler-Einheit erfasst wurde, den zweiten Betriebszustand zu aktivieren, und/oder das System dazu eingerichtet ist, nachdem ein verbundener Koppelungszustand zwischen der Primär-Koppler-Einheit und der Sekundär-Koppler-Einheit erfasst wurde, den dritten Betriebszustand zu aktivieren, und/oder das System dazu eingerichtet ist, nachdem ein verbundener Koppelungszustand zwischen der Primär-Koppler-Einheit und der Sekundär-Koppler-Einheit und eine Koppelung mit der Device-Einheit erfasst wurde, den ersten Betriebszustand zu aktivieren. Der aktivierte Betriebszustand wird dadurch vorteilhafterweise so gewählt, dass die jeweils zur Verfügung stehenden Verbindungen innerhalb der in dem System verbundenen Einheiten genutzt werden.

Das Aktivieren eines Betriebszustands kann insbesondere von der Master-Einheit initiiert werden. Es kann vorgesehen sein, dass die Master-Einheit in Abhängigkeit von dem Betriebszustand, der aktiviert ist oder aktiviert werden soll, einer verbundenen weiteren Einheit neue Identifikationsdaten zuweist oder eine bei der Datenverbindung genutzte Adressierung in Abhängigkeit von dem aktivierten Betriebszustand verändert.

Insbesondere besteht bei dem zweiten Betriebszustand eine Verbindung, nämlich eine IO-Link Verbindung, zwischen der Master- und der Primär-Koppler-Einheit. Dieser zweite Betriebszustand kann beispielsweise aktiviert werden, wenn es zu einer Trennung der Verbindung, insbesondere der Datenverbindung, zwischen Primär- und Sekundär-Koppler-Einheit kommt oder wenn keine Sekundär-Koppler-Einheit vorhanden ist oder diese beispielsweise ganz oder teilweise deaktiviert wird. Der zweite Betriebszustand kann in diesem Fall aktiviert bleiben, bis beispielsweise ein bestimmtes Zeitintervall abgelaufen ist, bis eine Verbindung zu der Primär-Koppler-Einheit hergestellt wird, bis bestimmte Konfigurationsschritte abgeschlossen sind und/oder bis ein bestimmtes Steuersignal erfasst wird.

Insbesondere besteht bei dem dritten Betriebszustand eine Verbindung, nämlich eine IO-Link Verbindung, zwischen der Master- und der Sekundär-Koppler-Einheit, wobei diese Verbindung insbesondere über die Primär-Koppler-Einheit hergestellt wird. Dieser dritte Betriebszustand kann beispielsweise aktiviert werden, wenn es zu einer Trennung der Verbindung, insbesondere der Datenverbindung, zwischen Sekundär-Koppler-Einheit und Device-Einheit kommt oder wenn keine Device-Einheit vorhanden ist oder diese beispielsweise ganz oder teilweise deaktiviert wird. Der dritte Betriebszustand kann in diesem Fall aktiviert bleiben, bis beispielsweise ein bestimmtes Zeitintervall abgelaufen ist, bis eine Verbindung zu der Device-Einheit hergestellt wird, bis bestimmte Konfigurationsschritte abgeschlossen sind und/oder bis ein bestimmtes Steuersignal erfasst wird.

Ferner kann der dritte Betriebszustand aktiviert werden, wenn eine Verbindung zwischen der Primär- und der Sekundär-Koppler-Einheit hergestellt wird, insbesondere auch wenn eine aktive Device-Einheit mit der Sekundär-Koppler-Einheit verbunden ist. Das heißt, nach dem Verbinden von Sekundär- und Primär-Koppler-Einheit kann zunächst die Sekundär-Koppler-Einheit direkt angesprochen und beispielsweise konfiguriert werden, wobei ferner vorgesehen sein kann, dass in diesem Betriebszustand die Device-Einheit noch nicht von der Master-Einheit angesprochen wird.

Insbesondere besteht bei dem ersten Betriebszustand eine Verbindung, etwa eine IO-Link Verbindung, zwischen der Master- und der Device-Einheit, wobei diese Verbindung insbesondere über die Primär- und Sekundär-Koppler-Einheiten hergestellt wird. Dieser erste Betriebszustand kann beispielsweise aktiviert werden, wenn die gesamte Kette der Verbindungen zwischen Master-Einheit, Primär- und Sekundär-Koppler-Einheit sowie Device-Einheit verbunden wird. Der erste Betriebszustand kann, wenn dieser Kopplungszustand erfasst wird, beispielsweise sofort aktiviert werden oder seine Aktivierung kann verzögert werden, bis beispielsweise ein bestimmtes Zeitintervall abgelaufen ist, bis bestimmte Konfigurationsschritte abgeschlossen sind und/oder bis ein bestimmtes Steuersignal erfasst wird.

Bei einer weiteren Ausbildung ist bei aktiviertem erstem Betriebszustand die Primär-Koppler-Einheit und/oder die Sekundär-Koppler-Einheit dazu eingerichtet, ein erstes Signal zu empfangen und anhand des empfangenen ersten Signals einen ersten Datenvergleich auszuführen, in Abhängigkeit vom Ergebnis des ersten Datenvergleichs entweder das erste Signal unmittelbar weiterzuleiten oder innerhalb eines vorgegebenen Zeitintervalls ein weiteres Signal zu empfangen, einen weiteren Datenvergleich durchzuführen sowie das erste und weitere Signal in Abhängigkeit von dem weiteren Datenvergleich weiterzuleiten. Hierdurch wird vorteilhafterweise sichergestellt, dass bei der Datenverbindung ein gezieltes Ansprechen bestimmter Einheiten ausgeführt werden kann und gleichzeitig Störungen und/oder eine fehlgeleitete Adressierung von Signalen vermieden werden.

Insbesondere empfängt die Primär-Koppler-Einheit und/oder die Sekundär-Koppler-Einheit das erstes Signal von der Master-Einheit.

Bei dem Datenvergleich werden insbesondere die Identifikationsdaten der im System angeschlossenen Einheiten und Geräte berücksichtigt.

Schwierigkeiten bei der eindeutigen Adressierung können beispielsweise dann auftreten, wenn bei einer IO-Link Verbindung eine Device-Einheit von einem Fremdhersteller verwendet wird, dessen sogenannte "*Vendor ID*" sich von den entsprechenden *"Vendor ID"-*Daten der Koppler-Einheiten unterscheidet. Ein Signal, insbesondere ein Steuerbefehl, an eine solche Device-Einheit kann gegebenenfalls von den Koppler-Einheiten als an sie gerichteter Steuerbefehl interpretiert werden. Ferner können andere Konstellationen auftreten, bei denen es zu einer fehlerhaften Ansteuerung kommen kann.

Bei dem Datenvergleich wir insbesondere ein empfangenes Signal mit einer vorgegebenen Menge von Vergleichssignalen abgeglichen. Stimmt das empfangene Signal mit einem der Vergleichssignale überein, so wird die Weiterleitung verzögert. Während dieser Verzögerung eintreffende weitere Signale werden darauf geprüft, ob es sich um Steuersignale für die Koppler-Einheit handelt. Ist dies nicht der Fall, so können die Signale weitergeleitet werden, andernfalls kann auf die Weiterleitung verzichtet und die Einheit durch das empfangene Steuersignal angesteuert werden. Für die Verzögerung kann beispielsweise eine vorgegebene Länge eines Zeitintervalls definiert sein. Ferner kann die Verzögerung so lange erfolgen, bis ein folgendes Signal empfangen wird. Insbesondere kann eine maximale Zeitdauer bis zum Weiterleiten des Signals definiert sein.

Insbesondere ist bei dem Verfahren eine Plausibilitätsprüfung vorgesehen, bei der ein von einem Koppler-Element empfangenes Signal darauf überprüft wird, an welche Einheit des Systems ein gegebenenfalls vorliegendes Steuersignal gerichtet ist.

Bei einer Weiterbildung ist bei aktiviertem zweitem Betriebszustand die Primär-Koppler-Einheit durch die Master-Einheit konfigurierbar und/oder bei aktiviertem drittem Betriebszustand die Sekundär-Koppler-Einheit durch die Master-Einheit konfigurierbar. Die Einheiten des Systems können dadurch vorteilhafterweise konfiguriert werden.

Es können verschiedene Arten von Konfigurierbarkeit der Koppler-Einheiten des Systems vorgesehen sein.

Bei einer Ausbildung ist bei aktiviertem zweitem und/oder drittem Betriebszustand ein Pairing von Primär- und Sekundär-Koppler-Einheit ausführbar. Dadurch kann vorteilhafterweise definiert werden, zwischen welchen Koppler-Einheiten eine Koppelung durchgeführt werden kann.

Die Konfigurierbarkeit der Koppler-Einheiten ist eine grundlegende Voraussetzung, um das Pairing zu ermöglichen. Insbesondere können dabei ein oder mehrere Sekundärkoppler einem Primärkoppler fest zugewiesen werden. D.h., es kommt nur dann eine Verbindung zustande, wenn die definierte Primär- und Sekundärseite vorhanden sind. Damit ist sichergestellt, dass sich nicht ungewollte ein falsches Gerät mit dem System verbindet und Fehler in der Anlage verursacht. Bei bekannten Systemen ist diese Möglichkeit nicht vorgesehen, da insbesondere zum Herstellen der Datenverbindung Verfahren ohne Pairing-Möglichkeit verwendet werden, etwa um die Koppler flexibler einsetzen zu können oder um eine einfachere Handhabung zu gewährleisten.

Andererseits kann mithilfe des Pairing sichergestellt werden, dass ein Werkzeugwechsler nicht beliebige Werkzeuge verwendet, sondern nur definierte Einheiten. Alternativ zu diesem Schritt des Pairing kann auch eine mechanische Kodierung vorgesehen sein, was die Flexibilität des Systems jedoch verringert. Beispielsweise kann, wenn eine definierte Lebensdauer eines Werkzeugs überschritten ist oder vermehrt Qualitätsauffälligkeiten auftreten, dieses Werkzeug softwareseitig vom Pairing gesperrt werden.

Ferner kann beispielsweise überprüft werden, ob eine durch das Pairing vorgesehene Device-Einheit mit dem System gekoppelt ist, insbesondere um einen Fälschungs- oder Plagiatschutz zu implementieren oder um die Verwendung einer lizenzierten Device-Einheit zu kontrollieren.

Bei einer weiteren Ausbildung ist bei aktiviertem zweitem und/oder drittem Betriebszustand ein Auslesen von Gerätedaten der Primär-Koppler-Einheit und/oder der Sekundär-Koppler Einheit durch die Master-Einheit M ausführbar, und/oder bei aktiviertem zweitem und/oder drittem Betriebszustand ist ein Einstellen zumindest eines Geräteparameters der Primär-Koppler-Einheit und/oder der Sekundär-Koppler Einheit durch die Master-Einheit ausführbar. Dies erlaubt vorteilhafterweise einen direkten Zugriff auf Daten der Koppler-Einheiten.

Beispielsweise kann das Auslesen von Gerätedaten genutzt werden, um frühzeitig Ausfallrisiken zu erkennen, etwa um die Ausfallsicherheit einer Anlage zu verbessern. Durch eine Datenverbindung zu den Koppler-Einheiten und Zugang zu Daten der dort erfassten und/oder gespeicherten Daten kann beispielsweise eine aktuelle Betriebstemperatur, die Anzahl der Übertemperaturereignisse oder die Anzahl der Abschaltungen wegen Überstroms erfasst werden. Alternativ oder zusätzlich können Kennwerte oder Parameter zur Beurteilung der Qualität der Datenverbindung oder Informationen zur aktuell installierten Firmware der Einheiten erfasst werden.

Bei einer Ausbildung werden bei der Konfiguration der Primär- und/oder Sekundär-Koppler-Einheit Geräteparameter eingestellt. Beispielsweise können Daten der Koppler-Einheit sichtbar gemacht werden, insbesondere wenn eine Device-Einheit mit dem System gekoppelt ist. So kann die Konfiguration beispielsweise so erfolgen, dass das Verhalten eines Anzeigeelements der Koppler-Einheit gesteuert wird, etwa einer oder mehrerer LEDs und/oder eines Displays.

Ferner kann ein Schaltausgang einer Koppler-Einheit konfigurierbar sein. Dabei können beispielsweise verschiedene Zustände konfiguriert werden, etwa ein "direktes Übertragen des Ausgangszustandes der Device-Einheit", "Signalisierung von Übertemperatur", "Signalisierung von Fremdobjekten im Feld der Leistungsübertragung" oder "direkte Ausgabe eines Schaltbits aus den Prozessdaten mittels eines Anzeigeelements".

Ferner kann die Ansteuerung eines Anzeigeelements konfiguriert werden, etwa für eine oder mehrere LEDs der Primär- und/oder Sekundär-Koppler-Einheit: Zum Beispiel können verschiedene Zustände konfiguriert werden, etwa eine "Anzeige des IO-Link Verbindungszustandes (Standard)", "Anzeige von Fehlern im Koppler", "Anzeige von Fehlern im Device (Error Events)" oder "Anzeige des Zustandes des Schaltausganges". Insbesondere ist dabei für mehrere LED individuell ein auslösendes Ereignis und/oder ein Parameter für das jeweilige Ausgabeverhalten konfigurierbar, etwa mittels Invertierung, Dauerleuchten, Blinkrhythmus oder Farbe.

In einem weiteren Beispiel kann bei der Konfigurierbarkeit ein Schwellwert eingestellt werden. Dies kann insbesondere genutzt werden, um Probleme oder Fehler bei der drahtlosen Leistungsübertragung zwischen den Koppler-Einheiten zu erkennen und gegebenenfalls zu behandeln. Ferner kann beispielsweise eine Empfindlichkeit für eine Strommessung oder eine Fremdobjekterkennung eingestellt werden. Über entsprechende Parameter kann zum Beispiel das Verhalten einer Fremdobjekterkennung den Erfordernissen der jeweiligen Einsatzumgebung angepasst werden, um Fehlauslösungen zu vermeiden. Beispielsweise kann das Definieren eines Nennstromes für eine gekoppelte Device-Einheit dazu dienen, die Zuverlässigkeit einer Fremdobjekterkennung zu verbessern, wobei zulässigen Betriebsgrenzen bereits vorab eingeschränkt werden und der Einfluss von Fremdobjekten auf die drahtlose Leistungsübertragung besser erkannt wird. Ferner kann die drahtlose Leistungsübertragung, insbesondere durch induktive Koppelung, auf eine konkrete Anwendung hin optimiert werden. Ferner kann die Leistungsübertragung geprüft und überwacht werden.

Ferner kann durch konfigurieren der Koppler-Einheiten eine bestimmte Leistung eingestellt werden und durch Begrenzen der übertragenen Leistung kann eine höhere Einsatztemperatur ermöglicht werden.

Die Konfiguration kann ferner die Datenübertragung oder Ausgangsfunktionen des Systems im sogenannten Standard IO-Mode implementiert werden.

Die Erfindung betrifft ferner ein Systemmodul mit einer Master-Einheit, die zur elektrischen Leistungsübertragung und zur Datenübertragung mit einer Primär-Koppler-Einheit gekoppelt ist, wobei das Systemmodul dazu eingerichtet ist, auf die oben beschriebene Weise mit einer Sekundär-Koppler-Einheit gekoppelt und in einem System der oben beschriebenen Art verwendet zu werden.

Die Erfindung betrifft ferner ein Systemmodul mit einer Device-Einheit, die zur elektrischen Leistungsübertragung und zur Datenübertragung mit einer Sekundär-Koppler-Einheit gekoppelt ist, wobei das Systemmodul dazu eingerichtet ist, auf die oben beschriebene Weise mit einer Primär-Koppler-Einheit gekoppelt und in einem System der oben beschriebenen Art verwendet zu werden.

Die Erfindung betrifft ferner ein Master-Modul für die Verwendung in einem System der oben beschriebenen Art.

Bei dem Verfahren zum Betreiben eines Systems mit einer Master-Einheit und zumindest einer Device-Einheit wird ein Steuersignal empfangen und in Abhängigkeit von dem empfangenen Steuersignal wird einer von drei aktivierbaren Betriebszuständen des Systems aktiviert. Dabei wird beim Aktivieren des ersten Betriebszustands eine dem IO-Link Standard gemäße datentechnische Verbindung zwischen der Master-Einheit und der Device-Einheit hergestellt. Beim Aktivieren des zweiten Betriebszustands werden einer Primär-Koppler-Einheit Primär-Koppler-Identifikationsdaten zugeordnet, wobei eine dem IO-Link Standard gemäße datentechnische Verbindung zwischen der Master-Einheit und der Primär-Koppler-Einheit hergestellt wird, und beim Aktivieren des dritten Betriebszustands werden einer Sekundär-Koppler-Einheit Sekundär-Koppler-Identifikationsdaten zugeordnet, wobei eine dem IO-Link Standard gemäße datentechnische Verbindung zwischen der Master-Einheit und der Sekundär-Koppler-Einheit hergestellt wird.

Das Verfahren ist insbesondere dazu ausgebildet, das System zu betreiben. Es weist daher dieselben Vorteile auf wie die erfindungsgemäße Vorrichtung.

Nachfolgend wird die Erfindung anhand der anliegenden Zeichnungen näher erläutert. Es zeigen:
- Figur 1: ein Ausführungsbeispiel des Systems;
- Figur 2A: ein Ausführungsbeispiel des Systems mit aktiviertem erstem Betriebszustand;
- Figur 2B: ein Ausführungsbeispiel des Systems mit aktiviertem zweitem Betriebszustand;
- Figur 2C: ein Ausführungsbeispiel des Systems mit aktiviertem drittem Betriebszustand;
- Figur 3: ein Ausführungsbeispiel einer Primär- oder Sekundär-Koppler-Einheit.

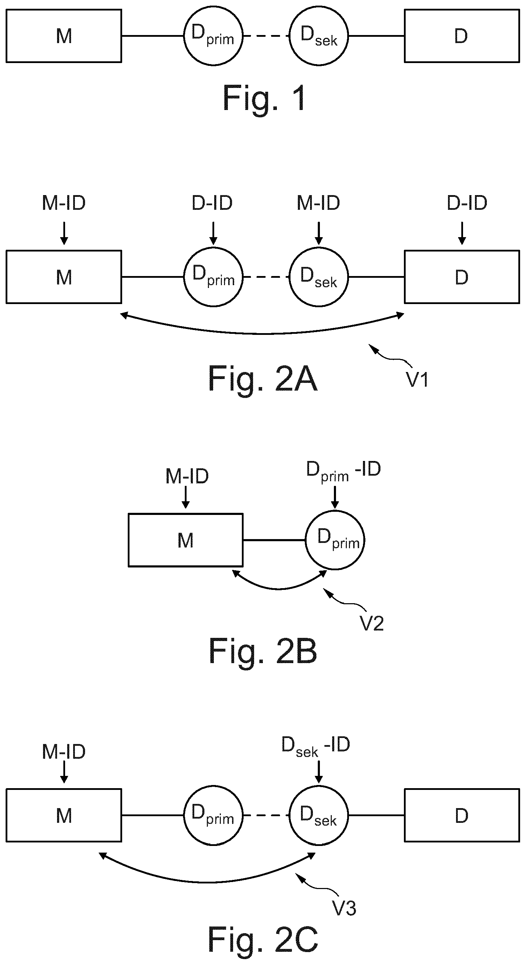

Mit Bezug zu Figur 1 wird ein Ausführungsbeispiel des Systems erläutert.

Das System umfasst eine Master-Einheit M und eine Device-Einheit D. Die Master-Einheit M umfasst bei dem Ausführungsbeispiel eine zentrale Steuerungseinheit M; als Device-Einheit D ist bei dem Beispiel ein Sensor oder ein Werkzeug vorgesehen. Die Master-Einheit M und die Device-Einheit D sind dabei so ausgebildet, dass sie über eine IO-Link Verbindung gekoppelt werden können.

Das System wird dabei zur Automatisierungssteuerung in einer Fertigungsanlage eingesetzt.

Bei weiteren Ausführungsbeispielen können andere Elemente vorgesehen sein, die über eine IO-Link Verbindung koppelbar sind.

Das System umfasst ferner eine Primär-Koppler-Einheit Dₚᵣᵢₘ und eine Sekundär-Koppler-Einheit Dₛₑₖ. Diese sind bei dem Ausführungsbeispiel als separate Einheiten ausgebildet.

Die Master-Einheit M ist mit der Primär-Koppler-Einheit Dₚᵣᵢₘ über eine kabelgebundene Leitung zur Übertragung von Daten und elektrischer Leistung gekoppelt. Analog dazu ist die Device-Einheit D mit der Sekundär-Koppler-Einheit Dₛₑₖ über eine weitere kabelgebundene Leitung zur Übertragung von Daten und elektrischer Leistung gekoppelt.

Die Primär-Koppler-Einheit Dₚᵣᵢₘ und die Sekundär-Koppler-Einheit Dₛₑₖ sind drahtlos ferner koppelbar ausgebildet. Dabei ist eine drahtlose Verbindung zur Daten- und Leistungsübertragung herstellbar. Bei dem Beispiel wird zur drahtlosen Datenübertragung ein an sich bekanntes Protokoll verwendet, etwa Bluetooth. Ferner ist zur Leistungsübertragung eine induktive Kopplung vorgesehen.

Mit Bezug zu den Figuren 2A bis 2C wird das Ausführungsbeispiel des Systems mit verschiedenen aktivierten Betriebszuständen erläutert. Dabei wird von dem oben erläuterten Ausführungsbeispiel des Systems ausgegangen.

Bei dem in der Figur 2A gezeigten Fall ist der erste Betriebszustand des Systems aktiviert. Es besteht eine dem IO-Link Standard gemäße datentechnische Verbindung zwischen der Master-Einheit M und der Device-Einheit D. Hierzu sind der Master-Einheit M Master-Identifikationsdaten M-ID und der Device-Einheit D Device-Identifikationsdaten D-ID zugeordnet. Die Primär- Dₚᵣᵢₘ und Sekundär-Koppler-Einheit Dₛₑₖ sind miteinander gekoppelt und so konfiguriert, dass sie Signale zwischen der Master- M und Device-Einheit D weiterleiten und das Herstellen einer Verbindung gemäß IO-Link Standard ermöglichen. Die entsprechende Datenverbindung V1 zwischen Master M und Device D ist als Pfeil angedeutet.

Bei dem in der Figur 2B gezeigten Fall ist der zweite Betriebszustand des Systems aktiviert. Es besteht eine dem IO-Link Standard gemäße datentechnische Verbindung zwischen der Master-Einheit M und der Primär-Koppler-Einheit Dₚᵣᵢₘ. Hierzu sind der Master-Einheit M Master-Identifikationsdaten M-ID und der Primär-Koppler-Einheit Dₚᵣᵢₘ Primär-Koppler-Identifikationsdaten Dₚᵣᵢₘ-ID zugeordnet. Über die Leitung zwischen Master-Einheit M und Primär-Koppler-Einheit Dₚᵣᵢₘ ist eine Datenverbindung V2 gemäß IO-Link Standard hergestellt, die als Pfeil angedeutet ist.

Bei dem in der Figur 2C gezeigten Fall ist der dritte Betriebszustand des Systems aktiviert. Es besteht eine dem IO-Link Standard gemäße datentechnische Verbindung zwischen der Master-Einheit M und der Sekundär-Koppler-Einheit Dₛₑₖ. Hierzu sind der Master-Einheit M Master-Identifikationsdaten M-ID und der Sekundär-Koppler-Einheit Dₛₑₖ Sekundär-Koppler-Identifikationsdaten Dₛₑₖ-ID zugeordnet. Die Primär- Dₚᵣᵢₘ und Sekundär-Koppler-Einheit Dₛₑₖ sind miteinander gekoppelt und so konfiguriert, dass sie Signale zwischen der Master- M und der Sekundär-Koppler-Einheit Dₛₑₖ weiterleiten und das Herstellen einer Verbindung gemäß IO-Link Standard ermöglichen. Die entsprechende Datenverbindung V3 zwischen Master M und Sekundär-Koppler-Einheit Dₛₑₖ ist als Pfeil angedeutet.

Das Wechseln der Betriebszustände des Systems kann auf verschiedene Weisen erfolgen, wie nachstehend beispielhaft erläutert. Dabei wird auf die vorstehend beschriebenen Figuren 1 und 2A bis 2C Bezug genommen.

Zunächst wird von dem in Figur 2B gezeigten Fall des zweiten Betriebszustands V2 ausgegangen, bei dem die Master-Einheit M mit der Primär-Koppler-Einheit Dₚᵣᵢₘ verbunden ist. Der Primär-Koppler-Einheit Dₚᵣᵢₘ sind dabei Primär-Koppler-Identifikationsdaten Dₚᵣᵢₘ-ID zugewiesen, die ein direktes Ansprechen über eine IO-Link Verbindung ermöglichen. Die Primär-Koppler-Identifikationsdaten Dₚᵣᵢₘ-ID umfassen bei dem Ausführungsbeispiel eine Vendor-ID und eine Device-ID, die jeweils der Primär-Koppler-Einheit Dₚᵣᵢₘ selbst zugeordnet sind. Bei dem Ausführungsbeispiel ist vorgesehen, dass der zweite Betriebszustand V2 aktiviert wird, wenn das System mit der Master-Einheit M und der Primär-Koppler-Einheit Dₚᵣᵢₘ in Betrieb genommen wird, insbesondere wenn keine Sekundär-Koppler-Einheit Dₛₑₖ angeschlossen ist.

Wird nun die Sekundär-Koppler-Einheit Dₛₑₖ angeschlossen, so kann automatisch ein Wechsel zum dritten Betriebszustand V3 erfolgen, wie etwa in Figur 2C gezeigt. Bei dem Ausführungsbeispiel ist vorgesehen, dass die Device-Einheit D nicht aktiviert und beispielsweise ausgeschaltet ist. Es kann jedoch auch vorgesehen sein, dass stets beim neuen Verbinden von Primär- Dₚᵣᵢₘ und Sekundär-Koppler-Einheit Dₛₑₖ zunächst in den dritten Betriebszustand V3 gewechselt wird, etwa für ein bestimmtes Zeitintervall, um zunächst den direkten Zugriff auf die Sekundär-Koppler-Einheit Dₛₑₖ zu ermöglichen, bevor der Zugriff auf die Device-Einheit D erfolgt.

Der Sekundär-Koppler-Einheit Dₛₑₖ sind Sekundär-Koppler-Identifikationsdaten Dₛₑₖ-ID zugewiesen, die hier ebenfalls eine Vendor-ID und eine Device-ID umfassen, die jeweils der Sekundär-Koppler-Einheit Dₛₑₖ selbst zugeordnet sind.

Bei dem Wechsel vom zweiten zum dritten Betriebszustand wird die Device-ID der Sekundär-Koppler-Einheit Dₛₑₖ der Primär-Koppler-Einheit Dₚᵣᵢₘ zugewiesen, sodass die Primär-Koppler-Einheit Dₚᵣᵢₘ für die angeschlossene Master-Einheit M praktisch "unsichtbar" wird. Die Primär-Koppler-Einheit Dₚᵣᵢₘ ist so konfiguriert, dass sie in diesem Betriebszustand die Signale und Steuerbefehle der Master-Einheit M an die Sekundär-Koppler-Einheit Dₛₑₖ weiterleitet und umgekehrt. Die Master-Einheit M greift in diesem Fall also nicht mehr direkt auf die Primär-Koppler-Einheit Dₚᵣᵢₘ zu, sondern ein direkter Zugriff erfolgt auf die Sekundär-Koppler-Einheit Dₛₑₖ.

Ein weiterer Wechsel erfolgt zum ersten Betriebszustand V1, etwa automatisch beim Anschluss oder Aktivieren einer Device-Einheit D. Dabei wird eine direkte Verbindung zwischen der Master- M und Device-Einheit D hergestellt, insbesondere eine Verbindung nach dem IO-Link Standard. Die Primär- Dₚᵣᵢₘ und Sekundär-Koppler-Einheit Dₛₑₖ sind nunmehr so konfiguriert, dass sie die Daten zwischen der Master- M und Device-Einheit D leiten, ohne selbst Teil des Netzwerks zu sein und ohne selbst direkt angesprochen zu werden.

Hierzu sind bei dem Ausführungsbeispiel der Primär-Koppler-Einheit Dₚᵣᵢₘ die Device-Identifikationsdaten D-ID zugewiesen, die insbesondere eine Vendor-ID und eine Device-ID umfassen. Das heißt, die IO-Link Verbindung der Master-Einheit M zur Primär-Koppler-Einheit Dₚᵣᵢₘ "erscheint" der Master-Einheit M wie eine direkte Verbindung zur Device-Einheit D. In ähnlicher Weise sind der Sekundär-Koppler-Einheit Dₛₑₖ die Master-Identifikationsdaten M-ID zugewiesen, sodass die IO-Link Verbindung der Device-Einheit D zur Sekundär-Koppler-Einheit Dₛₑₖ der Device-Einheit D wie eine direkte Verbindung zur Master-Einheit M "erscheint".

Bei dem Ausführungsbeispiel ist ferner ein bestimmtes Steuersignal definiert, mittels dessen ein Wechsel von dem ersten Betriebszustand zu einem der weiteren Betriebszustände ausgelöst wird. Wird dieses Steuersignal von der Master-Einheit M gesendet und durch die Primär- Dₚᵣᵢₘ und/oder Sekundär-Koppler-Einheit Dₛₑₖ empfangen, so wir zunächst ein Abbruch der bestehenden IO-Link Verbindung herbeigeführt und die Identifikationsdaten der beteiligen Koppler-Einheiten Dₚᵣᵢₘ, Dₛₑₖ werden neu zugeordnet. Anschließend wird der gewünschte Betriebszustand aktiviert und eine neue IO-Link Verbindung aufgebaut.

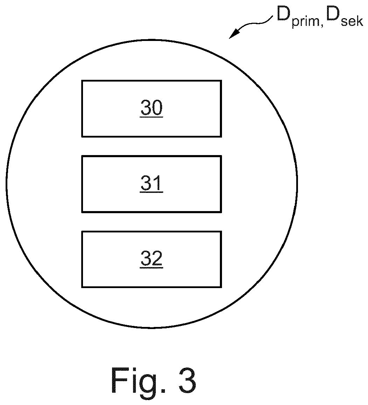

Mit Bezug zu Figur 3 wird der Aufbau eines Ausführungsbeispiels einer Primär- oder Sekundär-Koppler-Einheit erläutert. Die Darstellung ist schematisch und auf im Wesentlichen gleiche Weise auf die Primär- Dₚᵣᵢₘ und Sekundär-Koppler-Einheit Dₛₑₖ des oben erläuterten Ausführungsbeispiels des Systems übertragbar.

Die Koppler-Einheit Dₚᵣᵢₘ, Dₛₑₖ weist ein Anzeigeelement 30, ein Erfassungsmodul 31 und ein Konfigurationsmodul 32 auf.

Das Anzeigeelement 30 umfasst bei dem Ausführungsbeispiel eine oder mehrere Leuchtdioden (*light emitting diodes,* LEDs). Das Anzeigeelement 30 kann diese Leuchtdioden in Abhängigkeit so ansteuern, dass sie Lichtsignale ausgeben. Insbesondere erfolgt diese Ansteuerung in Abhängigkeit von einem Steuersignal, welches das Anzeigeelement 30 empfängt.

Die Lichtsignale können auf verschiedene, an sich bekannte Weisen ausgeprägt sein und etwa eine Helligkeit, Farbe oder dynamische Lichtveränderung wie Blinken aufweisen. Hierdurch kann eine Information ausgegeben werden, etwa als Warnsignal beim Überschreiten eines Schwellenwerts, etwa einer Temperatur oder einer elektrischen Leistung. Ferner kann ein Betriebs- und/oder Verbindungszustand für die Koppler-Einheit Dₚᵣᵢₘ, Dₛₑₖ, eine angeschlossene weitere Einheit M, D und/oder das System als ganzes ausgegeben werden.

Bei weiteren Ausführungsbeispielen umfasst das Anzeigeelement 30 alternativ oder zusätzlich zu den LEDs ein Display oder eine andere Anzeigefläche, beispielsweise mit einer Segmentanzeige oder einer Pixelmatrix, mittels derer eine grafische Ausgabe erfolgen kann. Das Anzeigeelement 30 umfasst bei weiteren Ausführungsbeispielen alternativ oder zusätzlich ein anderes Mittel zu Ausgabe eines Signals umfassen, etwa zur Ausgabe eines akustischen Signals.

Das Erfassungsmodul 31 ist dazu eingerichtet, verschiedene Betriebsparameter der Koppler-Einheit Dₚᵣᵢₘ, Dₛₑₖ zu erfassen. Beispielsweise können die Betriebsparameter eine Daten und/oder Leistungsübertragung zwischen den Koppler-Elementen Dₚᵣᵢₘ, Dₛₑₖ betreffen. Sie können ferner einen Temperaturparameter, eine Datenrate, einen Betriebs- und/oder Verbindungszustand für die Koppler-Einheit Dₚᵣᵢₘ, Dₛₑₖ, eine angeschlossene weitere Einheit M, D und/oder das System als ganzes betreffen.

Bei dem Ausführungsbeispiel ist ferner ein Konfigurationsmodul 32 der Koppler-Einheit Dₚᵣᵢₘ, Dₛₑₖ vorgesehen, die dazu eingerichtet ist, dass die Koppler-Einheit Dₚᵣᵢₘ, Dₛₑₖ konfigurierbar ist. Dazu kann das Konfigurationsmodul 32 eine Speichereinheit zum Speichern von Konfigurationsparametern umfassen, ferner kann es auch ein Kontrollelement umfassen, das eine Datenkommunikation zum Vornehmen der Konfigurationseinstellungen erlaubt. Insbesondere kann eine Konfiguration erfolgen, indem eine datentechnische Verbindung der Koppler-Einheit Dₚᵣᵢₘ, Dₛₑₖ zu der Master-Einheit M hergestellt wird; dabei können Konfigurationsparameter der Koppler-Einheit Dₚᵣᵢₘ, Dₛₑₖ ausgelesen und/oder verändert werden.

Mittels des Konfigurationsmoduls 32 kann bei dem Ausführungsbeispiel beispielsweise ein Pairing durchgeführt wird. Dabei wird definiert, mit welchen Einheiten die Koppler-Einheit Dₚᵣᵢₘ, Dₛₑₖ eine Verbindung herstellen kann, insbesondere eine datentechnische Verbindung. Beispielsweise kann definiert werden, zu welchen weiteren Koppler-Einheiten Dₚᵣᵢₘ, Dₛₑₖ eine Verbindung hergestellt werden kann. Ferner kann definiert werden, mit welchen Master- M und/oder Device-Einheiten D eine Verbindung hergestellt werden kann.

Bei dem Ausführungsbeispiel kann ferner mittels des Konfigurationsmoduls 32 beispielsweise ein Verhalten des Anzeigeelements 30 eingestellt werden, insbesondere ein Verhalten der LEDs. Beispielsweise können deren Lichtparameter zur Ausgabe einer Datenverbindung, einer übertragenen Leistung und/oder Datenrate, bestimmter Temperaturwerte und/oder Übertemperaturereignisse, eines Verbindungs- und/oder Betriebszustands oder anderer Parameter konfiguriert werden.

Mittels des Konfigurationsmoduls 32 kann bei dem Ausführungsbeispiel ferner beispielsweise eine zwischen Primär- Dₚᵣᵢₘ und Sekundär-Koppler-Einheit Dₛₑₖ übertragene und/oder maximal übertragbare elektrische Leistung eingestellt werden.

### Bezugszeichenliste

- M: Master-Einheit
- D: Device-Einheit
- Dₚᵣᵢₘ: Primär-Koppler-Einheit
- Dₛₑₖ: Sekundär-Koppler-Einheit
- M-ID: Master-Identifikationsdaten
- D-ID: Device-Identifikationsdaten
- Dₚᵣᵢₘ-ID: Primär-Koppler-Identifikationsdaten
- Dₛₑₖ-ID: Sekundär-Koppler-Identifikationsdaten
- V1: Datenverbindung (erster Betriebszustand)
- V2: Datenverbindung (zweiter Betriebszustand)
- V3: Datenverbindung (dritter Betriebszustand)
- 30: Anzeigeelement
- 31: Erfassungsmodul
- 32: Konfigurationsmodul

## Patentansprüche

1. System zum Herstellen einer Datenverbindung zwischen einer Master-Einheit (M) und zumindest einer Device-Einheit (D), wobei
die Master-Einheit (M) mit einer Primär-Koppler-Einheit (Dₚᵣᵢₘ) sowie die zumindest eine Device-Einheit (D) mit einer Sekundär-Koppler-Einheit (Dₛₑₖ) jeweils zur elektrischen Leistungsübertragung und zur Datenübertragung gekoppelt sind;
wobei
die Primär-Koppler-Einheit (Dₚᵣᵢₘ) und die Sekundär-Koppler-Einheit (Dₛₑₖ) zur Datenübertragung koppelbar sind; wobei
ein Steuersignal empfangbar ist; und
das System drei in Abhängigkeit von dem empfangenen Steuersignal aktivierbare Betriebszustände aufweist; wobei
beim aktivierten ersten Betriebszustand die Primär-Koppler-Einheit (Dₚᵣᵢₘ) und die Sekundär-Koppler-Einheit (Dₛₑₖ) miteinander gekoppelt sind und eine dem IO-Link Standard gemäße datentechnische Verbindung zwischen der Master-Einheit (M) und der Device-Einheit (D) besteht;
beim aktivierten zweiten Betriebszustand der Primär-Koppler-Einheit (Dₚᵣᵢₘ) Primär-Koppler-Identifikationsdaten (Dₚᵣᵢₘ-ID) zugeordnet sind, wobei eine dem IO-Link Standard gemäße datentechnische Verbindung zwischen der Master-Einheit (M) und der Primär-Koppler-Einheit (Dₚᵣᵢₘ) besteht; und
beim aktivierten dritten Betriebszustand der Sekundär-Koppler-Einheit (Dₛₑₖ) Sekundär-Koppler-Identifikationsdaten (Dₛₑₖ-ID) zugeordnet sind, wobei eine dem IO-Link Standard gemäße datentechnische Verbindung zwischen der Master-Einheit (M) und der Sekundär-Koppler-Einheit (Dₛₑₖ) besteht.

2. System gemäß Anspruch 1,
**dadurch gekennzeichnet, dass**
die Primär-Koppler-Einheit (Dₚᵣᵢₘ) und die Sekundär-Koppler-Einheit (Dₛₑₖ) als baulich getrennte Einheiten ausgebildet sind.

3. System gemäß einem der vorhergehenden Ansprüche,
**dadurch gekennzeichnet, dass**
die Koppelung der Master-Einheit (M) mit der Primär-Koppler-Einheit (Dₚᵣᵢₘ) und/oder die Koppelung der Device-Einheit (D) mit der Sekundär-Koppler-Einheit (Dₛₑₖ) über eine kabelgebundene Verbindung besteht.

4. System gemäß einem der vorhergehenden Ansprüche,
**dadurch gekennzeichnet, dass**
das System dazu eingerichtet ist, einen Koppelungszustand zwischen der Primär-Koppler-Einheit (Dₚᵣᵢₘ) und der Sekundär-Koppler-Einheit (Dₛₑₖ) zu erfassen; und
in Abhängigkeit von dem erfassten Koppelungszustand den ersten, zweiten oder dritten Betriebszustand zu aktivieren.

5. System gemäß Anspruch 4,
**dadurch gekennzeichnet, dass**
das System dazu eingerichtet ist, nachdem ein getrennter Koppelungszustand zwischen der Primär-Koppler-Einheit (Dₚᵣᵢₘ) und der Sekundär-Koppler-Einheit (Dₛₑₖ) erfasst wurde, den zweiten Betriebszustand zu aktivieren; und/oder
das System dazu eingerichtet ist, nachdem ein verbundener Koppelungszustand zwischen der Primär-Koppler-Einheit (Dₚᵣᵢₘ) und der Sekundär-Koppler-Einheit (Dₛₑₖ) erfasst wurde, den dritten Betriebszustand zu aktivieren; und/oder
das System dazu eingerichtet ist, nachdem ein verbundener Koppelungszustand zwischen der Primär-Koppler-Einheit (Dₚᵣᵢₘ) und der Sekundär-Koppler-Einheit (Dₛₑₖ) und eine Koppelung mit der Device-Einheit (D) erfasst wurde, den ersten Betriebszustand zu aktivieren.

6. System gemäß einem der vorhergehenden Ansprüche,
**dadurch gekennzeichnet, dass**
bei aktiviertem erstem Betriebszustand die Primär-Koppler-Einheit (Dₚᵣᵢₘ) und/oder die Sekundär-Koppler-Einheit (Dₛₑₖ) dazu eingerichtet ist, ein erstes Signal zu empfangen und anhand des empfangenen ersten Signals einen ersten Datenvergleich auszuführen;
in Abhängigkeit vom Ergebnis des ersten Datenvergleichs entweder das erste Signal unmittelbar weiterzuleiten oder
innerhalb eines vorgegebenen Zeitintervalls ein weiteres Signal zu empfangen, einen weiteren Datenvergleich durchzuführen sowie das erste und weitere Signal in Abhängigkeit von dem weiteren Datenvergleich weiterzuleiten.

7. System gemäß einem der vorhergehenden Ansprüche,
**dadurch gekennzeichnet, dass**
bei aktiviertem zweitem Betriebszustand die Primär-Koppler-Einheit (Dₚᵣᵢₘ) durch die Master-Einheit (M) konfigurierbar ist; und/oder
bei aktiviertem drittem Betriebszustand die Sekundär-Koppler-Einheit (Dₛₑₖ) durch die Master-Einheit (M) konfigurierbar ist.

8. System gemäß einem der vorhergehenden Ansprüche,
**dadurch gekennzeichnet, dass**
bei aktiviertem zweitem und/oder drittem Betriebszustand ein Pairing von Primär- (Dₚᵣᵢₘ) und Sekundär-Koppler-Einheit (Dₛₑₖ) ausführbar ist.

9. System gemäß einem der vorhergehenden Ansprüche,
**dadurch gekennzeichnet, dass**
bei aktiviertem zweitem und/oder drittem Betriebszustand ein Auslesen von Gerätedaten der Primär-Koppler-Einheit (Dₚᵣᵢₘ) und/oder der Sekundär-Koppler Einheit (Dₛₑₖ) durch die Master-Einheit (M) ausführbar ist; und/oder
bei aktiviertem zweitem und/oder drittem Betriebszustand ein Einstellen zumindest eines Geräteparameters der Primär-Koppler-Einheit (Dₚᵣᵢₘ) und/oder der Sekundär-Koppler Einheit (Dₛₑₖ) durch die Master-Einheit (M) ausführbar ist.

10. Verfahren zum Betreiben eines Systems mit einer Master-Einheit (M) und zumindest einer Device-Einheit (D), wobei
ein Steuersignal empfangen wird; und
in Abhängigkeit von dem empfangenen Steuersignal einer von drei aktivierbaren Betriebszuständen des Systems aktiviert wird; wobei
beim Aktivieren des ersten Betriebszustands eine dem IO-Link Standard gemäße datentechnische Verbindung zwischen der Master-Einheit (M) und der Device-Einheit (D) hergestellt wird, wobei eine Primär-Koppler-Einheit (Dₚᵣᵢₘ) und eine Sekundär-Koppler-Einheit (Dₛₑₖ) miteinander gekoppelt sind, und;
beim Aktivieren des zweiten Betriebszustands der Primär-Koppler-Einheit (Dₚᵣᵢₘ) Primär-Koppler-Identifikationsdaten (Dₚᵣᵢₘ-ID) zugeordnet werden, wobei eine dem IO-Link Standard gemäße datentechnische Verbindung zwischen der Master-Einheit (M) und der Primär-Koppler-Einheit (Dₚᵣᵢₘ) hergestellt wird; und
beim Aktivieren des dritten Betriebszustands der Sekundär-Koppler-Einheit (Dₛₑₖ) Sekundär-Koppler-Identifikationsdaten (Dₛₑₖ-ID) zugeordnet werden, wobei eine dem IO-Link Standard gemäße datentechnische Verbindung zwischen der Master-Einheit (M) und der Sekundär-Koppler-Einheit (Dₛₑₖ) hergestellt wird.

## Claims

1. System for establishing a data connection between a master unit (M) and at least one device unit (D), wherein the master unit (M) is coupled to a primary coupler unit (Dₚᵣᵢₘ) and the at least one device unit (D) is coupled to a secondary coupler unit (Dₛₑₖ) in each case for electrical power transmission and for data transmission; wherein
the primary coupler unit (Dₚᵣᵢₘ) and the secondary coupler unit (Dₛₑₖ) are couplable for data transmission; wherein a control signal is receivable; and
the system has three operating states that are activatable depending on the received control signal; wherein
when the first operating state is activated, the primary coupler unit (Dₚᵣᵢₘ) and the secondary coupler unit (Dₛₑₖ) are coupled to one another and there is a data connection according to the IO-Link standard between the master unit (M) and the device unit (D);
when the second operating state is activated, primary coupler identification data (Dₚᵣᵢₘ-ID) are assigned to the primary coupler unit (Dₚᵣᵢₘ), wherein there is a data connection according to the IO-Link standard between the master unit (M) and the primary coupler unit (Dₚᵣᵢₘ); and when the third operating state is activated, secondary coupler identification data (Dₛₑₖ-ID) are assigned to the secondary coupler unit (Dₛₑₖ), wherein there is a data connection according to the IO-Link standard between the master unit (M) and the secondary coupler unit (Dₛₑₖ).

2. System according to Claim 1,
**characterized in that**
the primary coupler unit (Dₚᵣᵢₘ) and the secondary coupler unit (Dₛₑₖ) are designed as structurally separate units.

3. System according to either of the preceding claims,
**characterized in that**
the coupling of the master unit (M) to the primary coupler unit (Dₚᵣᵢₘ) and/or the coupling of the device unit (D) to the secondary coupler unit (Dₛₑₖ) are/is via a wired connection.

4. System according to any of the preceding claims,
**characterized in that**
the system is configured to detect a coupling state between the primary coupler unit (Dₚᵣᵢₘ) and the secondary coupler unit (Dₛₑₖ); and
to activate the first, second or third operating states depending on the detected coupling state.

5. System according to Claim 4,
**characterized in that**
the system is configured to activate the second operating state after a disconnected coupling state between the primary coupler unit (Dₚᵣᵢₘ) and the secondary coupler unit (Dₛₑₖ) has been detected; and/or
the system is configured to activate the third operating state after a connected coupling state between the primary coupler unit (Dₚᵣᵢₘ) and the secondary coupler unit (Dₛₑₖ) has been detected; and/or
the system is configured to activate the first operating state after a connected coupling state between the primary coupler unit (Dₚᵣᵢₘ) and the secondary coupler unit (Dₛₑₖ) and a coupling to the device unit (D) have been detected.

6. System according to any of the preceding claims,
**characterized in that**
when the first operating state is activated, the primary coupler unit (Dₚᵣᵢₘ) and/or the secondary coupler unit (Dₛₑₖ) are/is configured to receive a first signal and to carry out a first data comparison on the basis of the received first signal;
depending on the result of the first data comparison either to forward the first signal directly or,
within a predefined time interval, to receive a further signal, to carry out a further data comparison and to forward the first and further signals depending on the further data comparison.

7. System according to any of the preceding claims,
**characterized in that**
when the second operating state is activated, the primary coupler unit (Dₚᵣᵢₘ) is configurable by the master unit (M); and/or
when the third operating state is activated, the secondary coupler unit (Dₛₑₖ) is configurable by the master unit (M).

8. System according to any of the preceding claims,
**characterized in that**
when the second and/or third operating state are/is activated, a pairing of primary coupler unit (Dₚᵣᵢₘ) and secondary coupler unit (Dₛₑₖ) is able to be carried out.

9. System according to any of the preceding claims,
**characterized in that**
when the second and/or third operating state are/is activated, a reading out of device data of the primary coupler unit (Dₚᵣᵢₘ) and/or of the secondary coupler unit (Dₛₑₖ) is able to be carried out by the master unit (M); and/or
when the second and/or third operating state are/is activated, a setting of at least one device parameter of the primary coupler unit (Dₚᵣᵢₘ) and/or of the secondary coupler unit (Dₛₑₖ) is able to be carried out by the master unit (M).

10. Method for operating a system with a master unit (M) and at least one device unit (D), wherein
a control signal is received; and
one of three activatable operating states of the system is activated depending on the received control signal; wherein
when the first operating state is activated, a data connection according to the IO-Link standard is established between the master unit (M) and the device unit (D), wherein a primary coupler unit (Dₚᵣᵢₘ) and a secondary coupler unit (Dₛₑₖ) are coupled to one another, and
when the second operating state is activated, primary coupler identification data (Dₚᵣᵢₘ-ID) are assigned to the primary coupler unit (Dₚᵣᵢₘ), wherein a data connection according to the IO-Link standard is established between the master unit (M) and the primary coupler unit (Dₚᵣᵢₘ); and
when the third operating state is activated, secondary coupler identification data (Dₛₑₖ-ID) are assigned to the secondary coupler unit (Dₛₑₖ), wherein a data connection according to the IO-Link standard is established between the master unit (M) and the secondary coupler unit (Dₛₑₖ).

## Revendications

1. Système destiné à établir une liaison de données entre une unité formant maître (M) et au moins une unité formant dispositif (D),
l'unité formant maître (M) étant couplée à une unité formant coupleur primaire (Dₚᵣᵢₘ) et l'au moins une unité formant dispositif (D) étant couplée à une unité formant coupleur secondaire (Dₛₑₖ), chacune étant destinée à la transmission d'énergie électrique et à la transmission de données ;
l'unité formant coupleur primaire (Dₚᵣᵢₘ) et l'unité formant coupleur secondaire (Dₛₑₖ) pouvant être couplées pour effectuer la transmission de données ;
un signal de commande pouvant être reçu ; et
le système comportant trois états de fonctionnement activables en fonction du signal de commande reçu ;
lorsque le premier état de fonctionnement est activé, l'unité formant coupleur primaire (Dₚᵣᵢₘ) et l'unité formant coupleur secondaire (Dₛₑₖ) étant couplées l'une à l'autre et une liaison de données conforme à la norme 10-Link étant établie entre l'unité formant maître (M) et l'unité formant dispositif (D) ;
lorsque le deuxième état de fonctionnement est activé, des données d'identification de coupleur primaire (Dₚᵣᵢₘ-ID) étant associées à l'unité formant coupleur primaire (Dₚᵣᵢₘ), une liaison de données conforme à la norme 10-Link étant établie entre l'unité formant maître (M) et l'unité formant coupleur primaire (Dₚᵣᵢₘ) ; et
lorsque le troisième état de fonctionnement est activé, des données d'identification de coupleur secondaire (Dₛₑₖ-ID) étant associées à l'unité formant coupleur secondaire (Dₛₑₖ), une liaison de données conforme à la norme 10-Link étant établie entre l'unité formant maître (M) et l'unité formant coupleur secondaire (_{Dsek}).

2. Système selon la revendication 1,
**caractérisé en ce que**
l'unité formant coupleur primaire (Dₚᵣᵢₘ) et l'unité formant coupleur secondaire (Dₛₑₖ) sont conçues comme des unités structurellement distinctes.

3. Système selon l'une des revendications précédentes,
**caractérisé en ce que**
le couplage de l'unité formant maître (M) à l'unité formant coupleur primaire (Dₚᵣᵢₘ) et/ou le couplage de l'unité formant dispositif (D) à l'unité formant coupleur secondaire (Dₛₑₖ) sont effectués par le biais d'une liaison filaire.

4. Système selon l'une des revendications précédentes,
**caractérisé en ce que**
le système est conçu pour détecter un état de couplage entre l'unité formant coupleur primaire (Dₚᵣᵢₘ) et l'unité formant coupleur secondaire (Dₛₑₖ) ; et
pour activer le premier, le deuxième ou le troisième état de fonctionnement en fonction de l'état de couplage détecté.

5. Système selon la revendication 4,
**caractérisé en ce que**
le système est conçu pour activer le deuxième état de fonctionnement après qu'un état de couplage séparé entre l'unité formant coupleur primaire (Dₚᵣᵢₘ) et l'unité formant coupleur secondaire (Dₛₑₖ) a été détecté ; et/ou
le système est conçu pour activer le troisième état de fonctionnement après qu'un état de couplage relié entre l'unité formant coupleur primaire (Dₚᵣᵢₘ) et l'unité formant coupleur secondaire (Dₛₑₖ) a été détecté ; et/ou
le système est conçu pour activer le premier état de fonctionnement après qu'un état de couplage relié entre l'unité formant coupleur primaire (Dₚᵣᵢₘ) et l'unité formant coupleur secondaire (Dₛₑₖ) et un couplage à l'unité formant dispositif (D) ont été détectés.

6. Système selon l'une des revendications précédentes,
**caractérisé en ce que**
lorsque le premier état de fonctionnement est activé, l'unité formant coupleur primaire (Dₚᵣᵢₘ) et/ou l'unité formant coupleur secondaire (Dₛₑₖ) sont conçues pour recevoir un premier signal et pour effectuer une première comparaison de données sur la base du premier signal reçu ;
en fonction du résultat de la première comparaison de données, soit pour transmettre immédiatement le premier signal, soit
dans un intervalle de temps prédéterminé, pour recevoir un autre signal, effectuer une autre comparaison de données et transmettre le premier signal et d'autres signaux en fonction de l'autre comparaison de données.

7. Système selon l'une des revendications précédentes,
**caractérisé en ce que**
lorsque le deuxième état de fonctionnement est activé, l'unité formant coupleur primaire (Dₚᵣᵢₘ) peut être configurée par l'unité formant maître (M) ; et/ou
lorsque le troisième état de fonctionnement est activé, l'unité formant coupleur secondaire (Dₛₑₖ) peut être configurée par l'unité formant maître (M).

8. Système selon l'une des revendications précédentes,
**caractérisé en ce que**
lorsque le deuxième et/ou le troisième état de fonctionnement est activé, un appairage des unités formant coupleur primaire (Dₚᵣᵢₘ) et secondaire (Dₛₑₖ) peut être effectué.

9. Système selon l'une des revendications précédentes,
**caractérisé en ce que**
lorsque le deuxième et/ou le troisième état de fonctionnement sont activés, une lecture des données d'appareil de l'unité formant coupleur primaire (Dₚᵣᵢₘ) et/ou de l'unité formant coupleur secondaire (Dₛₑₖ) peut être effectuée par l'unité formant maître (M) ; et/ou
lorsque le deuxième et/ou le troisième état de fonctionnement sont activés, un réglage de l'au moins un paramètre d'appareil de l'unité formant coupleur primaire (Dₚᵣᵢₘ) et/ou de l'unité formant coupleur secondaire (Dₛₑₖ) peut être effectué par l'unité formant maître (M).

10. Procédé de fonctionnement d'un système comprenant une unité formant maître (M) et au moins une unité formant dispositif (D),
un signal de commande étant reçu ; et
en fonction du signal de commande reçu, l'un des trois états de fonctionnement activables du système étant activé ;
lorsque le premier état de fonctionnement est activé, une liaison de données conforme à la norme IO-Link étant établie entre l'unité formant maître (M) et l'unité formant dispositif (D), une unité formant coupleur primaire (Dₚᵣᵢₘ) et une unité formant coupleur secondaire (Dₛₑₖ) étant couplées l'une à l'autre, et ;
lorsque le deuxième état de fonctionnement est activé, des données d'identification de coupleur primaire (Dₚᵣᵢₘ-ID) étant associées à l'unité formant coupleur primaire (Dₚᵣᵢₘ), une liaison de données conforme à la norme IO-Link étant établie entre l'unité formant maître (M) et l'unité formant coupleur primaire (Dₚᵣᵢₘ) ; et
lorsque le troisième état de fonctionnement est activé, des données d'identification de coupleur secondaire (Dₛₑₖ-ID) étant associées à l'unité formant coupleur secondaire (Dₛₑₖ), une liaison de données conforme à la norme IO-Link étant établie entre l'unité formant maître (M) et l'unité formant coupleur secondaire (Dₛₑₖ).
